# EUROPÄISCHE PATENTSCHRIFT

(11) **EP 1 332 814 B1**
(45) Veröffentlichungstag und Bekanntmachung des Hinweises auf die Patenterteilung: **14.07.2010**
(21) Anmeldenummer: 03001936.8
(22) Anmeldetag: 30.01.2003
(51) Int. Cl.: B23B 13/04

(54) **Vorrichtung zum Zuführen von Werkstoffstangen zu einer Werkzeugmaschine**
Bar stock feeder for a lathe
Dispositif d'avancement d'une barre pour tours d'usinage

(30) Priorität: 05.02.2002 DE 10204518
(43) Veröffentlichungstag der Anmeldung: 06.08.2003
(73) Patentinhaber: Eugen Ostertag Maschinen-Herstellung Gerätebau GmbH, 89150 Laichingen (DE)
(72) Erfinder: Ohlhoff, Hans-Jürgen, 89073 Ulm (DE)
(74) Vertreter: Hennicke, Ernst Rüdiger

(56) Entgegenhaltungen:
- EP-A- 0 611 621
- DE-A1- 1 477 278
- FR-A- 2 211 310
- GB-A- 2 013 537
- US-A- 4 366 734
- US-A- 5 662 014
- US-A- 5 676 031

## Beschreibung

Die Erfindung betrifft eine Vorrichtung zum Zuführen von Werkstoffstangen zu einer mehrspindeligen Werkzeugmaschine, insbesondere einem Mehrspindeldrehautomaten, gemäß dem Oberbegriff des Anspruchs 1 und insbesondere mit mehreren sich in Vorschubrichtung erstreckenden, an einem Maschinengestell um eine zentrale Achse herum angeordneten, den Werkstückspindeln der Werkzeugmaschine zugeordneten und gemeinsam mit diesen weiterschaltbaren Aufnahmekästen mit darin vorgesehenen, wenigstens zur Werkzeugmaschine hin offenen Aufnahmekanälen für Werkstoffstangen und mit einer Vorschubeinrichtung mit einem am werkzeugmaschinenseitigen Ende des in der Schaltposition befindlichen Aufnahmekastens vorgesehenen Klemmorgan, das in Vorschubrichtung der Werkstoffstangen hin- und herbewegbar ist. Eine solche Vorrichtung ist beispielsweise aus DE4431814 A1 bekannt.

Derartige Vorrichtungen werden häufig auch als Stangenlademagazine bezeichnet und kommen insbesondere bei Drehautomaten zur Anwendung, mit denen Stangenmaterial, also lange Rund- oder Mehrkantstäbe aus Automatenstahl, Messing, Kupfer o.dgl. zu im allgemeinen vergleichsweise kurzen Drehteilen verarbeitet werden. Nach Fertigstellung eines solchen Drehteils wird dieses abgestochen und anschließend die durch eine Hohlspindel des Drehautomaten von dessen Rückseite hindurchgeführte Werkstoffstange automatisch um die benötigte Bearbeitungslänge in den Arbeitsraum der Drehmaschine vorgeschoben, wobei sich der Vorgang so häufig wiederholt, bis die Stange weitgehend vollständig zu Drehteilen verarbeitet wurde.

Der Vorschub der Werkstückstange erfolgt dabei in den meisten Fällen mittels einer Vorschubeinrichtung der Drehmaschine selbst. Diese Vorschubeinrichtung ist der Hohlspindel der Drehmaschine zugeordnet und schiebt nach Öffnen der Spannzange die Werkstoffstange mittels einer Vorschubzange um den gewünschten Weg vor, bevor die Spannzange die Werkstoffstange wieder fest umschließt. Für einspindelige Werkzeugmaschinen ist es auch bekannt, die Vorschubbewegung der Werkstoffstange von der Stangenladevorrichtung vornehmen zu lassen, die dem (einspindeligen) Drehautomaten o.dgl. zugeordnet ist. Hierzu ist es bekannt, dem Stangenlademagazin einen Werkstoffstangenschieber in Form eines Betätigungsfingers zuzuordnen, der am hinteren Ende der sich gerade in Bearbeitung befindlichen Werkstoffstange anliegt und diese durch die Werkstück-Hohlspindel des Drehautomaten schiebt, während deren Spannzange geöffnet ist.

Aus der FR-A-2 211 310 ist eine Vorrichtung zum Nachschieben von Materialstangen in einspindeligen Drehautomaten bekannt, die einen an einem Maschinengestell angeordneten Schlitten aufweist, der eine mit der einzigen Hohlspindel der Drehmaschine fluchtende Spannzange trägt, die die Werkstoffstange in deren vorderen, zur Drehmaschine hin weisenden Bereich erfasst. Durch Verfahren des Schlittens mit der daran fest angeordneten Zange kann die Werkstoffstange in die Drehmaschinenspindel eingeführt werden.

Aus der DE 44 31 814 A1 oder der korrespondierenden US 5,662,014 ist eine Vorrichtung der eingangs genannten, gattungsgemäßen Art bekannt, mit einem am vorderen Ende eines der Aufnahmekästen angeordneten Klemmorgan, das sich gemeinsam mit dem Aufnahmekasten in Vorschubrichtung vor- und zurückbewegt. Da für den Vorschubvorgang der gesamte Aufnahmekasten mit der darin aufgenommenen Werkstoffstange vor- und anschließend der Aufnahmekasten bei feststehender Werkstoffstange wieder zurückbewegt werden muß, bedarf es bei der bekannten Vorrichtung eines großen apparativen, regelungstechnischen und energetischen Aufwands, um die vergleichsweise großen Massen von Aufnahmekasten und darin aufgenommener Werkstoffstange um das korrekte Maß vor- und zurückzubewegen. Die erreichbaren Schaltgeschwindigkeiten sind bei den großen, zu bewegenden Massen nur gering. Darüber hinaus hat die bekannte Vorrichtung den Nachteil, daß mit ihr nur solche Werkzeugmaschinen mit Werkstoffstangen bestückbar sind, die über eine eigene Werkstoffstangen-Vorschubeinrichtung verfügen, da das Klemmorgan des bekannten Stangenladers die Werkstoffstange maximal bis ans rückwärtige Ende der Werkstückspindel des Drehautomaten schieben kann. Ohne eigene Werkstoffstangen-Vorschubeinrichtung des Drehautomaten würde bei Einsatz des bekannten Stangenladers immer ein inakzeptabel langes Reststück von einer jeden Werkstoffstange verbleiben, dessen Länge der Spindellänge der Werkstückspindel mindestens entspricht. Der Einsatzbereich der bekannten Vorrichtung ist somit nur sehr eingeschränkt. Tatsächlich wird das Klemmorgan bei der bekannten Maschine nur genutzt, um die neue Werkstoffstange in die Hohlspindel einzuführen, bis deren eigene Vorschubeinrichtung die neue Werkstoffstange erfassen kann. Im Betrieb der Maschine erfolgt der Stangenvorschub dann von der drehmaschineneigenen Vorschubeinrichtung. Das Klemmorgan bei der bekannten Maschine eignet sich für einen Materialvorschub vor allem deswegen nicht, weil die Klemmung der Werkstoffstange vor dem Weiterschalten aus der Vorschub- in die nächstfolgende Position immer aufgehoben werden muss und die Materialstangen in den übrigen Spindellagen vom Stangenlader in ihrer Position nicht festgelegt sind, so dass ein Vorschub durch die Klemmzange mit zu großen Ungenauigkeiten verbunden wäre.

Aufgabe der Erfindung ist es, ein Stangenlademagazin für mehrspindelige Werkzeugmaschinen, insbesondere für Mehrspindeldrehautomaten, der eingangs genannten Art zu schaffen, mit der ein exakter Stangenvorschub mit gegenüber der bekannten Einrichtung erheblich geringerem Aufwand erreichbar ist. Dabei soll die erfindungsgemäße Vorrichtung in besonders vorteilhafter Ausgestaltung universell einsetzbar und auch für solche Werkzeugmaschinen geeignet sein, die über keine eigene Werkstoffstangen-Vorschubeinrichtung verfügen, also beispielsweise auch für mit Hohlspindeln versehene Mehrspindel-Futterautomaten, die ursprünglich nicht zur Verarbeitung von Stangenmaterial vorgesehen gewesen sind.

Diese Aufgabe wird mit einer Vorrrichtung gemäß Anspruch 1 gelöst, wobei jedem Aufnahmekasten eine eigene Vorschubeinrichtung mit einem die im zugehörigen Aufnahmekanal aufgenommene Werkstoffstange fassenden Klemmorgan zugeordnet ist, wobei die Klemmorgane der Vorschubeinrichtungen in einer Vorschubspindellage der Werkzeugmaschine von einer gemeinsamen Betätigungseinrichtung unabhängig vom zugehörigen Aufnahmekasten zwischen der Werkzeugmaschine und dem werkzeugmaschinenseitigen Ende des zugehörigen Aufnahmekastens in Vorschubrichtung hin- und herbewegbar sind.

Anders als bei der bekannten Vorrichtung ist es bei der Erfindung nicht erforderlich, für die Vorschubbewegung den gesamten, gerade in der Vorschubspindellage befindlichen Aufnahmekasten zu verschieben, sondern es wird beim Vorschubvorgang lediglich das Klemmorgan mit der darin eingespannten Werkstoffstange vorgeschoben und nach Lösen der Klemmverbindung wieder entlang der Werkstoffstange zurückgezogen. Die dabei zu bewegenden Massen sind verglichen mit der aus der US 5,662,014 bekannten Vorrichtung erheblich kleiner, was den konstruktiven Aufwand erheblich verringert und eine größere Genauigkeit beim Vorschubvorgang bei gleichzeitig größerer Vorschubgeschwindigkeit ermöglicht. Erfindungsgemäß haben hierfür alle Aufnahmekästen zwar eigene Vorschubeinrichtungen mit Klemmorganen, diese sind aber nicht in allen Spindelpositionen betätigbar, sondern nur in der bzw. den Vorschubspindelposition(en). Dabei kommt man durch die Erfindung in vorteilhafter Weise mit einer gemeinsamen Betätigungseinrichtung aus, die ortsfest an der Vorschubspindelposition der Vorrichtung vorzugsweise am Maschinengestell angeordnet ist.

Die Klemmorgane können im wesentlichen aus aktiven oder passiven Spannzangen bestehen. Eine besonders vorteilhafte Ausgestaltung der Erfindung ergibt sich, wenn die Spannzangen einen vorderen, rohrförmigen Einstoßabschnitt mit an dessen vorderen Ende angeordnetem Spannring aufweisen, dessen Innendurchmesser zur Aufnahme einer Werkstückstange ausgebildet und dessen Außendurchmesser so bemessen ist, daß der rohrförmige Einstoßabschnitt ins Innere einer zugeordneten Hohlspindel der Werkzeugmaschine einschiebbar ist. Durch diese Ausgestaltung ist es besonders gut möglich, die Vorrichtung nach der Erfindung auch für solche Werkzeugmaschinen einzusetzen, die über keine eigene Vorschubeinrichtung für die Werkstoffstangen verfügen, denn mit Hilfe des rohrförmigen, ins Innere der Werkstückspindel der Drehmaschine o.dgl. einschiebbaren Einstoßabschnitts ist es möglich, die Werkstoffstange bis unmittelbar an die Spannzange der Werkstückspindel heran vorzuschieben, so daß die Länge nicht bearbeitbarer Reststücke der Werkstoffstangen auf ein Minimum beschränkt ist, auch wenn diese allein von der Vorschubeinrichtung der erfindungsgemäßen Vorrichtung vorgeschoben wird.

Vorzugsweise sind die Aufnahmekästen entlang einer durch ihre Längsachse verlaufenden Teilungsebene geteilt und weisen mindestens zwei Teilschalen auf, die mittels einer Öffnungseinrichtung zur Freigabe der Aufnahmekanäle relativ zueinander und rechtwinklig zur Längsachse beweglich, vorzugsweise um eine zur Längsachse parallele Schwenkachse verschwenkbar sind. Um nach Abarbeitung einer Werkstoffstange eine neue Stange in den jeweiligen Aufnahmekasten einzubringen, werden einfach dessen Teilschalen geöffnet, wonach die neue Stange dann quer zur Vorschubrichtung in den Aufnahmekanal hineinrollen oder hineingelegt werden kann. Wenn mindestens einem Aufnahmekasten an seinem rückwärtigen, der Werkzeugmaschine abgewandten Ende eine Widerlagereinrichtung für eine in den Aufnahmekanal aufgenommene Werkstoffstange zugeordnet ist, kann sich diese nicht frei nach hinten verschieben, was insbesondere beim Einfädeln der neuen Werkstoffstange in das Klemmorgan von besonderem Vorteil ist.

Das Klemmorgan der Vorschubeinrichtung ist erfindungsgemäß von einer in Vorschubrichtung zwischen einer hinteren und einer vorderen Endstellung hin- und herbewegbaren Betätigungseinrichtung verschiebbar. Vorzugsweise ist die erfindungsgemäße Vorrichtung mit einem zwischen der Vorschubeinrichtung bzw. dem diese betätigenden Betätigungseinrichtung und der Werkzeugmaschine vor deren rückwärtiger, mit der im Aufnahmekanal aufgenommenen Werkstoffstange fluchtender Spindelöffnung angeordneten, in den Vorschubweg ein- bzw. aus diesem herausbewegbaren Anschlagelement für die Werkstoffstange versehen, das die Kalibrierung der Einstoßlänge der neu eingelegten Werkstoffstangen erleichtert.

In vorteilhafter Weiterbildung der Erfindung sind die Aufnahmekästen entgegen der Vorschubrichtung gemeinsam mit den Klemmorganen verschieblich am Maschinengestell gelagert. Wenn eine neue Werkstoffstange in den geöffneten Aufnahmekasten eingelegt ist, kann dann das Klemmorgan der Vorschubeinrichtung um das gewünschte Maß zurück verfahren werden und sich dabei über die neue Stange schieben, wobei der Aufnahmekasten dabei von der Vorschubeinrichtung mit zurückgeschoben wird und somit die Bewegung des Klemmorgans nicht behindert. Die am rückwärtigen Ende des Kastens vorgesehene Widerlagereinrichtung sorgt dabei dafür, daß sich die neue Werkstoffstange nicht ebenfalls in Längsrichtung verschiebt. Sobald das Klemmorgan um das gewünschte Maß auf die neue Stange aufgeschoben ist, wird die neue Stange von der verschiebbaren Widerlagereinrichtung vorgeschoben, wirft dabei das Reststück aus und schiebt die Stange vor, bis ein eingeschwenkter Anschlag erreicht ist und klemmt die neue Stange fest. Danach verfährt die Klemmvorrichtung gemeinsam mit dieser neuen Stange nach vorn in Vorschubrichtung. Dabei schiebt sie den Stangeanfang durch die Werkstückspindel der Werkzeugmaschine bis in deren Arbeitsraum vor. Der Aufnahmekasten wird hierbei ebenfalls wieder in seine vordere Endlage gebracht; während der dann folgenden, vom Klemmorgan vorgenommenen Vorschubbewegungen, mit denen die Werkstoffstange nach abgeschlossener Bearbeitung eines Werkstücks vom dem Klemmorgan vorgeschoben wird, damit die Bearbeitung eines neuen Werkstücks beginnen kann, bleibt der Aufnahmekasten allerdings in Längsrichtung ortsfest im Maschinengestell, d.h. er macht eine Bewegung in Längsrichtung nur bei Aufnahme einer neuen Werkstoffstange durch.

Bei alledem ist es von Vorteil, wenn die Aufnahmekästen und die Klemmorgane jeweils eine gemeinsame Länge haben, die der Länge der aufzunehmenden Werkstückstange höchstens entspricht.

In vorteilhafter Weiterbildung der Erfindung können die Klemmorgane Betätigungsnocken aufweisen, die in eine umlaufende, im Bereich der gemeinsamen Betätigungseinrichtung eine Unterbrechung aufweisende Verriegelungsnut an der Betätigungseinrichtung einfassen. Nur im Bereich der Unterbrechung der Verriegelungsnut können die Klemmorgane in Vorschubrichtung vor- bzw. zurückbewegt werden; im übrigen Bereich der Verriegelungsnut, die in konstruktiv besonders einfacher Gestaltung durch zwei voneinander beabstandete, etwa kreisringsegmentförmige Scheibenelemente gebildet werden kann, wird eine Längsbewegung der Klemmorgane durch die beiden Nutflanken wirksam verhindert.

Ganz besonders vorteilhaft ist es, daß es im Rahmen der Erfindung auch ohne weiteres möglich ist, zwei oder mehrere gemeinsame Betätigungseinrichtungen um die zentrale Achse herum anzuordnen, um gleichzeitig zwei oder mehrere Klemmorgane hin- und herzubewegen. Hierdurch werden also zwei oder mehr Vorschubpositionen für eine Mehrspindelmaschine geschaffen, d.h. es ist möglich, gleichzeitig an zwei oder mehreren Spindelpositionen der Maschine die Werkstoffstangen vorzuschieben und dementsprechend in einer Maschine, beispielsweise einem Achtspindel-Drehautomaten, mehr als ein Werkstück während eines Trommelumlaufs fertigzustellen. Dabei ist es aufgrund der einfachen konstruktiven Gestaltung der erfindungsgemäßen Vorrichtung auch sehr leicht möglich, zusätzliche Vorschubpositionen nachzurüsten, indem einfach an der gewünschten zusätzlichen Schaltpositionen eine Betätigungseinrichtung angebaut und die Verriegelungsnut an dieser Stelle unterbrochen wird. Es ist nicht erforderlich, an dieser neuen Vorschubposition auch Einrichtungen zum Laden von neuen Werkstoffstangen vorzusehen, da hierfür eine Position vollständig genügt.

Die Vorschubeinrichtung(en) bzw. deren gemeinsame Betätigungseinrichtung weist bzw. weisen vorzugsweise einen steuer- bzw. regelbaren Stellantrieb auf. Der Stellantrieb kann z.B. ein Linearmotor, ein Hydraulikzylinder, ein Spindeltrieb od.dgl. sein.

Weiterhin ist es vorteilhaft, wenn dem Klemmorgan ein an die Umfangsfläche einer Werkstückstange radial anstellbares, angetriebenes Stellorgan zugeordnet ist, das beispielsweise im wesentlichen aus einem Reibrad o.dgl. bestehen kann. Mit dem Stellorgan ist es möglich, die Einführung der Werkstoffstange in das Klemmorgan der Vorschubeinrichtung zu erleichtern und danach durch weiteres langsames Drehen auch das Einschieben in die maschinenseitige Spannzange zu ermöglichen, was für das Einschieben insbesondere von Mehrkantprofilstäben erheblich von Vorteil ist. Zweckmäßig ist das Stellorgan von seinem Antrieb entkoppelbar ist; bei geeigneter Auslegung seines Gewichts und seiner Größe sowie der Größe seiner radialen Anstellkraft gegen die Materialstange kann es dann auch als Dämpfungsglied dienen, um Schwingungen der Werkstoffstange zu reduzieren, die durch deren Rotation bei der Werkstückbearbeitung in der Drehmaschine entstehen.

Weitere Merkmale und Vorteile der Erfindung ergeben sich aus der nachfolgenden Beschreibung und der zugehörigen Zeichnung, worin eine bevorzugte Ausführungsform der Erfindung anhand eines Beispiels näher erläutert wird. Es zeigt:
- Fig.1: einen Mehrspindeldrehautomaten mit einer dieser zugeordneten, erfindungsgemäßen Stangenladevor- richtung in einer schematisch vereinfachten, per- spektivischen Darstellung;
- Fig.2: den Gegenstand der Fig.1 in einer Draufsicht un- ter Wegbruch von Teilen des Maschinengestells und der Maschinenverkleidung;
- Fig.3-5: den Gegenstand der Fig.1, ausschließlich mit dem in der Ladeposition befindlichen Aufnahmekasten und dem zugehörigen Klemmorgan in verschiedenen Stellungen bei der Beschickung mit einer neuen Werkstoffstange;
- Fig.6: den Gegenstand der Fig.1 in einem Schnitt längs der Linie VI-VI;
- Fig.7: eine Einzelheit der Lademagazintrommel mit der Vorschubeinrichtung im Schnitt längs der Linie VII-VII nach Fig.6;
- Fig.8: den Gegenstand der Fig.7 in einer anderen Stel- lung der Vorschubeinrichtung;
- Fig.9: die Vorschubeinrichtung der erfindungsgemäßen Vorrichtung in einer Seitenansicht und teilweise im Schnitt; und
- Fig.10: den Gegenstand der Fig.9 in einer Ansicht X-X nach Fig.9.

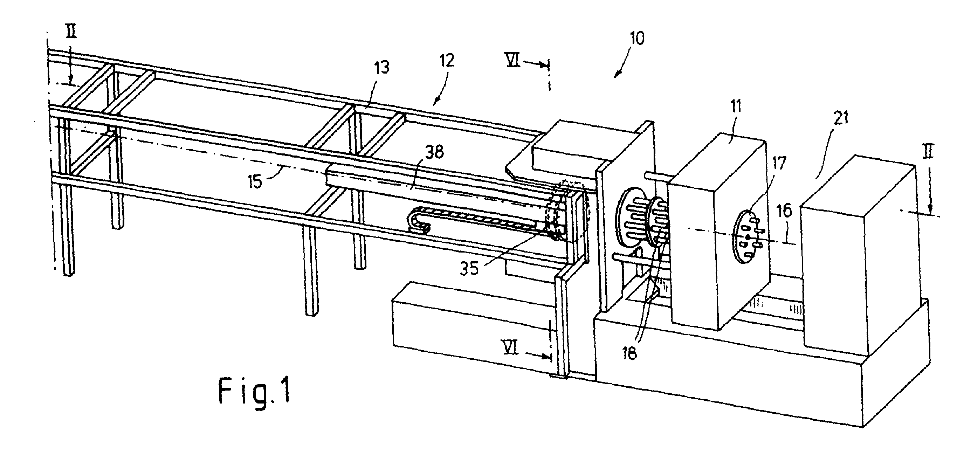

In Fig. 1 bezeichnet 10 eine Mehrspindeldrehautomaten-Anlage, die im wesentlichen aus einem Mehrspindeldrehautomaten 11 sowie einer Vorrichtung 12 zum Zuführen von Werkstoffstangen zu dem Drehautomaten 11 besteht. Die Vorrichtung 12, deren Aufbau und Wirkungsweise nachfolgend im einzelnen beschrieben wird, ist Gegenstand der vorliegenden Erfindung.

Wie sich aus den Zeichnungen ergibt, weist die Vorrichtung 12 ein Maschinengestell 13 auf, in dessen Inneren eine Werkstückstangentrommel 14 um eine horizontale Achse 15 drehbar angeordnet ist, die mit der Drehachse 16 der Spindeltrommel 17 des Mehrspindeldrehautomaten 11 fluchtet. Im vorliegenden Beispiel handelt es sich bei dem Mehrspindeldrehautomaten um einen solchen mit sechs Werkstückspindeln 18; demgemäß ist auch die Stangentrommel 14 mit insgesamt sechs Aufnahmekästen 19 für Werkstückstangen 20 versehen, die in der Stangentrommel 14 so angeordnet sind, daß sie mit den Spindelachsen der Werkstückspindeln 18 fluchten. Die Aufnahmekästen 19 nehmen die Werkstückstangen 20 in ihrem Inneren auf und werden gemeinsam mit den Werkstückspindeln in die nächste Position weitergeschaltet, wenn ein Bearbeitungsschritt an den in den Arbeitsraum 21 der Drehmaschine 11 hineinragenden Werkstücken beendet ist und die Werkstücke in die nächste Position gebracht werden müssen, damit der nächste Bearbeitungsschritt ausgeführt werden kann. Die Wirkungsweise solcher Mehrspindeldrehautomaten mit gemeinsam mit der Spindeltrommel weiterschaltender Stangentrommel eines Stangenlademagazins ist hinreichend bekannt und soll hier nicht weiter in allen Einzelheiten erläutert werden.

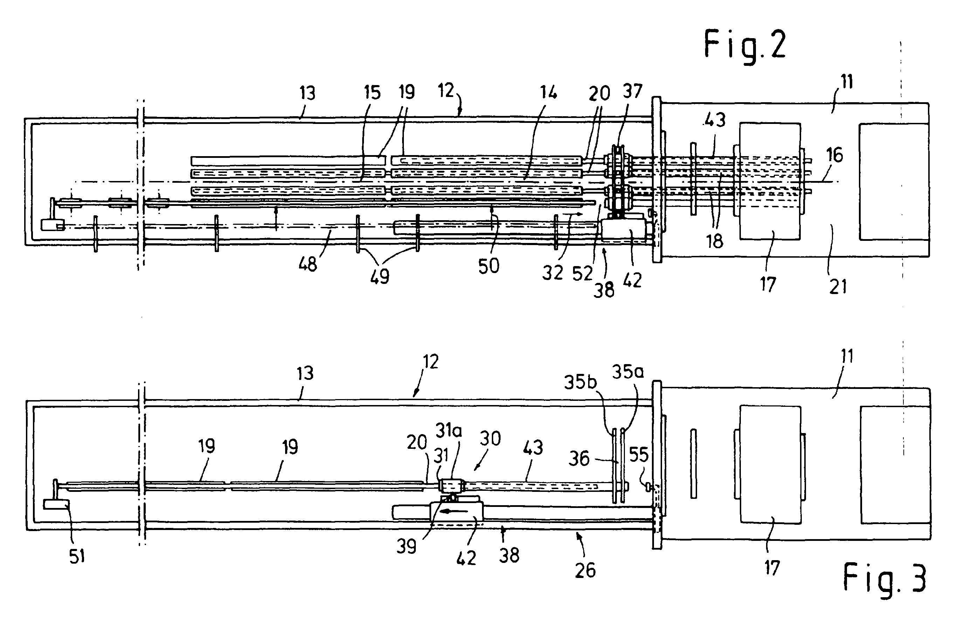

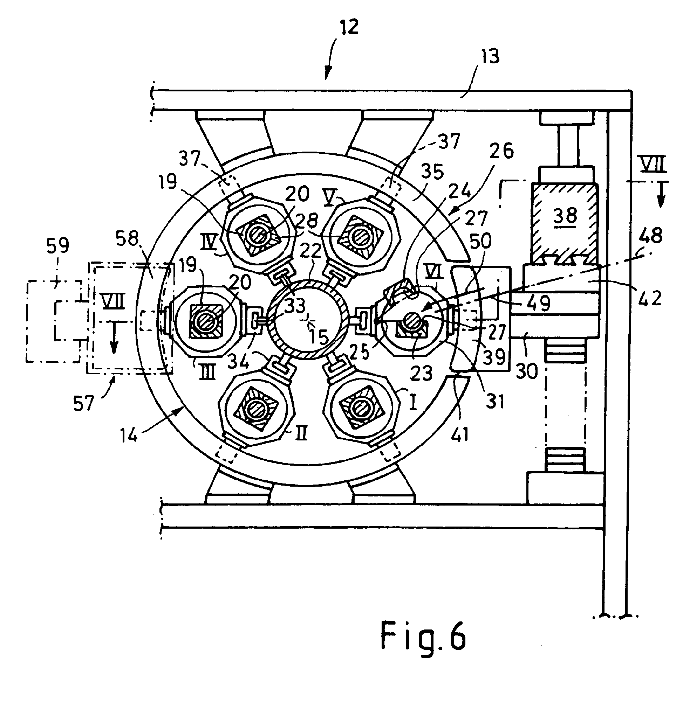

Die sechs gleichmäßig um die horizontale Achse 15 an einem zentralen Trägerrohr 22 (Fig. 6) angeordneten Aufnahmekästen 19 bestehen jeweils aus zwei Teilschalen 23,24, die um eine zur Achse 15 parallele Schwenkachse, die in Fig. 6 bei 25 angedeutet ist, relativ zueinander verschwenkbar sind, wenn sich der Aufnahmekasten an einer Vorschub- und Beschickungsstation 26 befindet, die sich in Fig. 6 rechts von der Drehachse 15 der Stangentrommel befindet. In Fig. 2 ist die Vorschub- und Beschickungsstation 26 der Lage des in der Draufsicht untersten Aufnahmekastens zugeordnet; in den Fig. 3 bis 5 sind alle anderen Aufnahmekästen mit Ausnahme des in der Vorschub- und Beschickungsstation befindlichen aus Gründen der besseren Übersichtlichkeit nicht mit dargestellt.

In der geschlossenen Stellung der Aufnahmekästen 19, in der die beiden Teilschalen 23,24 mit den darin angeordneten, halbkreisförmigen Nuten 27 aneinanderliegen, bilden diese Aufnahmekanäle 28 für die Werkstückstangen 20, die hierdurch mit geringem Spiel geführt werden und sich in den Aufnahmekanälen 28 drehen können, wenn die Werkstückspindeln des Drehautomaten angetrieben sind. Die beiden Teilschalen 23 und 24 sind im Betrieb der Drehautomatenanlage üblicherweise fest miteinander verriegelt und können nur in der Beschickungsstation 26 in die in Fig. 6 dargestellte Lage geöffnet werden, wenn eine neue Werkstückstange eingelegt werden soll, nachdem die vorige Stange abgearbeitet wurde.

Es versteht sich, daß die Aufnahmekanäle 28 in den Aufnahmekästen 19 an deren werkzeugmaschinenseitigen Enden 29 offen sind, so daß die Werkstückstangen 20 aus diesen drehmaschinenseitigen Öffnungen der Aufnahmekanäle 28 heraus- und in die rückwärtigen Öffnungen der als Hohlspindeln ausgeführten Werkstückspindeln 18 des Drehautomaten eingeführt werden können. Jedem Aufnahmekanal 28 bzw. dem diesen bildenden Aufnahmekasten 19 ist eine Vorschubeinrichtung 30 zugeordnet, wobei jede Vorschubeinrichtung mit einem die im zugehörigen Aufnahmekanal 28 aufgenommene Werkstoffstange fassenden Klemmorgan 31 versehen ist, das bei Erreichen der Vorschubposition 26 in Vorschubrichtung 32 hin- und herbewegbar ist. Die Anordnung ist so getroffen, daß die Vorschubeinrichtungen 30 entsprechend den zugehörigen Aufnahmekästen 19 am zentralen Trägerrohr 22 angeordnet sind und gemeinsam mit diesem und den Aufnahmekästen weitergeschaltet werden. Um die Beweglichkeit der Vorschubeinrichtungen in Vorschubrichtung 32 zu ermöglichen, ist das zentrale Trägerrohr 22 mit sechs gleichmäßig an seinem Umfang angeordneten, im Querschnitt etwa T-förmigen Führungsschienen 33 versehen, und die Vorschubeinrichtungen 30 weisen an ihrer radialen Innenseite Gleitschuhe 34 auf, die die Führungsschienen 33 umfassen und entlang diesen verschieblich sind.

Da ein Vorschub der Werkstückstangen 20 im Ausführungsbeispiel nicht in jeder der sechs Schaltstellungen I. bis VI. erfolgen soll, sondern nur in der Schaltstellung VI., die der in der Vorschub- und Beschickungsstation 26 befindliche Aufnahmekasten inne hat, ist die Längsbeweglichkeit der Vorschubeinrichtungen 30 in den übrigen Schaltstellungen I. bis V. mittels eines kreissegment- oder C-förmigen Verriegelungselements 35 gehindert, das aus zwei etwa C-förmigen Scheibenelementen 35a,b besteht, die im Maschinengestell 13 fest montiert sind und zwischen sich eine Verriegelungsnut 36 ausbilden. In die Verriegelungsnut fassen die Klemmorgane mit daran angeordneten, radial nach außen vorspringenden Betätigungsnocken 37 ein, solange sich das Klemmorgan in einer der Trommelstellungen I. bis V. befindet.

Im Bereich der Vorschub- und Beschickungsstation 26 ist das Verriegelungselement 35 unterbrochen und das in der Schaltstellung VI. sich befindende Klemmorgan 31 der Vorschubeinrichtung 30 somit in Vorschubrichtung 32 beweglich. Für die Bewegung des Klemmorgans 31 sorgt dabei eine Betätigungseinrichtung 38 mit einer kreissegmentförmigen Schiebeklammer 39, die eine Führungsnut 40 hat, die in ihren Abmessungen an die Verriegelungsnut 36 angepaßt ist. Die Schiebeklammer ist während des Schaltvorgangs der Stangentrommel 14 so in dem Maul 41 des C-förmigen Verriegelungselements 35 positioniert, daß Führungsnut und Verriegelungsnut miteinander fluchten und der Nocken des aus der Schaltstellung V. in die Schaltstellung VI. geschalteten Klemmorgans ungehindert aus der Verriegelungsnut aus- und in die Führungsnut einlaufen kann. Bereits kurz vor Beendigung des Schaltvorgangs wird das nun in der Schaltstellung VI. befindliche Klemmorgan 31 geöffnet und in Axialrichtung verschoben. Die Spannzange der Maschine bleibt dabei geschlossen. Hierzu bewegt ein nicht näher dargestellter Stellantrieb wie beispielsweise ein Linearmotor, ein Hydraulikzylinder, eine Stellspindel od.dgl. der Betätigungseinrichtung 38 den die Schiebeklammer 39 tragenden Vorschubschlitten 42 um den gewünschten Betrag nach hinten, um den späteren Vorschubvorgang ausführen zu können, also in Richtung von der Mehrspindeldrehmaschine weg. Nach erfolgtem Abstechvorgang des fertigen Werkstückes in der Maschine wird das Klemmorgan 31 nach vorn, also in Richtung der Mehrspindeldrehmaschine verschoben, wobei das inzwischen wieder geschlossene Klemmorgan 31 die darin aufgenommene Werkstückstange 20 mitnimmt und dabei das vordere Ende der Werkstückstange aus dem vorderen, in den Arbeitsraum 21 mündenden Ende der Werkstückspindel 18 um das gewünschte Maß herausschiebt. Die Werkstückstange wird dann von der Werkstückspindel gespannt.

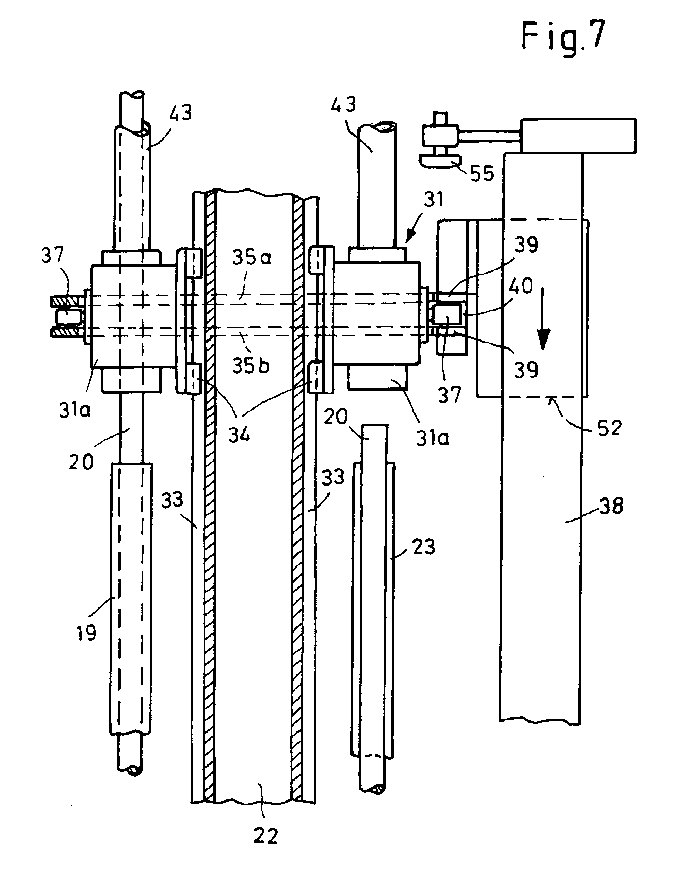

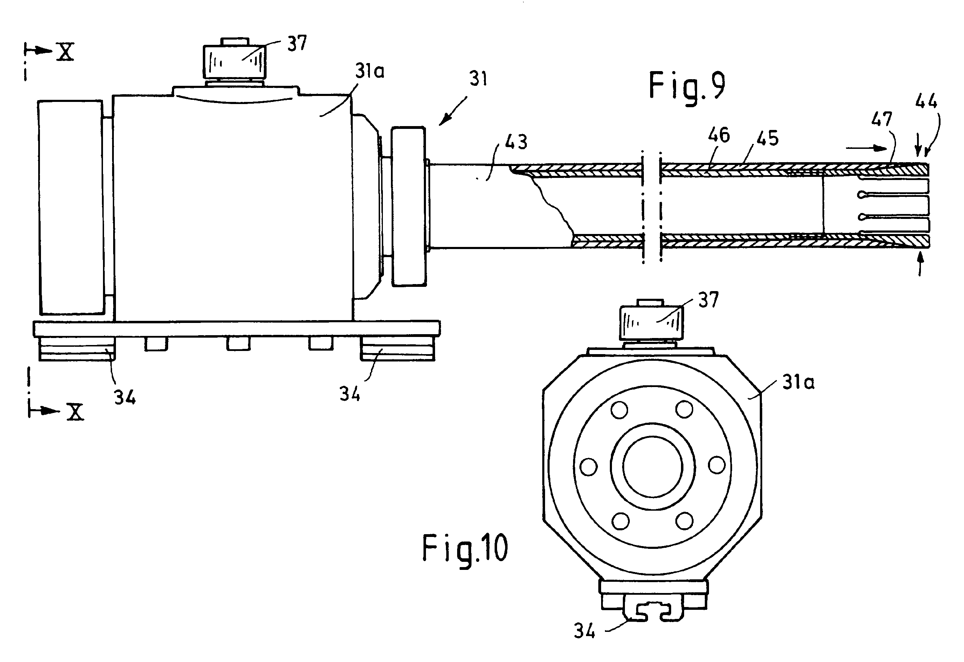

Der Aufbau der Klemmorgane 31 ist am besten anhand der Fig. 7 bis 10 ersichtlich. Man erkennt, daß die Klemmorgane 31 der Vorschubeinrichtungen vergleichsweise lange, zu der Drehmaschine hin weisende, rohrförmige Einstoßabschnitte 43 aufweisen. Die Einstoßabschnitte sind in rückwärtigen Lagerkörpern 31a der Klemmorgane 31 drehbar gelagert. Die Einstoßabschnitte 43 haben an ihrem vorderen Ende einen Spannring 44, der im wesentlichen von einem äußeren Zylinderteil 45 und einem inneren Zylinderteil 46 gebildet wird. Mittels eines nicht näher dargestellten Spannzylinders ist das äußere Zylinderteil hin- und herbeweglich. Die beiden Zylinderteile sind an ihrem Ende mit konischen Spannflächen 47 versehen, so daß bei einer Ausschubbewegung des äußeren Zylinderteils (in Fig. 9 nach rechts) dieses an seinem Ende radial zusammengedrückt wird und dadurch die aufgenommene Werkstückstange fest spannt. Der Spannring führt beim Spannen und Entspannen selbst keine Axialbewegung aus, wodurch eine besonders hohe Postioniergenauigkeit der Materialstange erreicht wird.

Der Außendurchmesser des äußeren Zylinderteils 45 ist so bemessen, daß dieses in die zugehörige hohle Werkstückspindel 18 von dessen rückwärtigen Ende her eingestoßen werden kann. Die Länge der beiden Zylinderteile ist so bemessen, daß sich im Betrieb der Drehautomatenanlage die vorderen Spannringe 44 der Einstoßabschnitte 43 möglichst nahe der (nicht dargestellten) Werkstückspannzangen der Werkstückspindeln des Drehautomaten befinden.

Man erkennt, daß mit einer einzigen Betätigungseinrichtung die Klemmorgane aller sechs Vorschubeinrichtungen in der Schaltstellung VI., also bei Erreichen der Vorschub- und Beschikkungsstation in Axialrichtung der Werkstückstangen hin- und herbewegbar sind.

Wenn die in den Aufnahmekanälen 28 der Aufnahmekästen 19 aufgenommenen Werkstückstangen 20 nach Herstellung einer Anzahl von Drehteilen so kurz geworden sind, daß das verbliebene Reststück die Herstellung eines weiteren Drehteils nicht mehr gestattet, ist es erforderlich eine neue Materialstange in der Beschickungsstation in den Aufnahmekanal des sich dann dort befindenden Aufnahmekastens einzulegen und mit ihrem vorderen, zur Drehmaschine hin weisenden Ende in die Vorschubeinrichtung einzuführen. um dies in besonders einfacher und ökonomischer Weise zu ermöglichen, ist der in der Beschickungsstation befindliche Aufnahmekasten entgegen der Vorschubrichtung 32 im Maschinengestell nach hinten bewegbar, wobei die an dem Aufnahmekasten angeordneten Gleitschuhe 34 entlang der von ihnen umfaßten Führungsschiene gleiten. Die Vorgehensweise beim Einlegen einer neuen Werkstückstange ist in den Fig. 2 bis 5 und 7 und 8 am besten illustriert.

Sobald eine Werkstückstange vollständig abgearbeitet ist, befindet sich der verbliebene Stangenrest ausschließlich in dem vorderen, in die Werkstückspindel bis unmittelbar hinter deren Werkstück-Spannzange hineinragenden Einstoßabschnitt 43 des Klemmorgans 31. Der Aufnahmekanal 28 des entsprechenden Aufnahmekastens 19 ist also bereits vollständig leer, wenn der Aufnahmekasten in die Vorschub- und Beschickungsstation gelangt, um dort neu bestückt zu werden. Hierzu werden die beiden Teilschalen 23 und 24 in die in Fig. 6 bei VI dargestellte Lage aufgeklappt, was beispielsweise mittels eines (nicht dargestellten) Hydraulikzylinders erfolgen kann, der von einem die Restlänge der vorigen Stange ermittelnden Sensor ausgelöst wird, sobald dieser feststellt, daß das verbliebene Reststück der vorigen Stange die Herstellung eines weiteren Werkstücks nicht mehr gestattet.

In einem seitlich neben der Beschickungsstation 26 und etwas oberhalb dieser angeordneten Stangenmagazin 48 sind Werkstückstangen magaziniert, von denen eine über eine in Fig.6 lediglich strichpunktiert angedeutete Rampe 49 anschließend in Richtung des Pfeils 50 in den geöffneten Aufnahmekanal 28 hineinrollt und in der unteren halbkreisförmigen Nut liegenbleibt. Die axiale Lage der Werkstückstange kann dabei variieren; es ist lediglich erforderlich, daß die Stange mit ihre beiden Enden zwischen einer hinten im Maschinengestell 13 angeordneten Widerlagereinrichtung 51 und dem drehmaschinenabgewandten Ende 52 der Vorschubeinrichtung im Aufnahmekanal 28 zu liegen kommt (Fig.2, Fig.7).

Durch die optimierte Baulänge der von der Maschine mitgeschalteten Teile (Vorschubeinrichtungen und Aufnahmekästen) auf die max. Materialstangenlänge ist es beim Nachladevorgang einer neuen Stange, der bereits während der Bearbeitung des letzten Teiles erfolgt, zweckmäßig, die neue geladene Materialstange durch gefederte Auflagerollen o.dgl. an ihrem hinteren Ende abzustützen, um ein Durchhängen der Materialstange zu vermeiden. Die gefederten Auflagerollen werden durch den später zurückgeschobenen Aufnahmekasten zurückgedrückt.

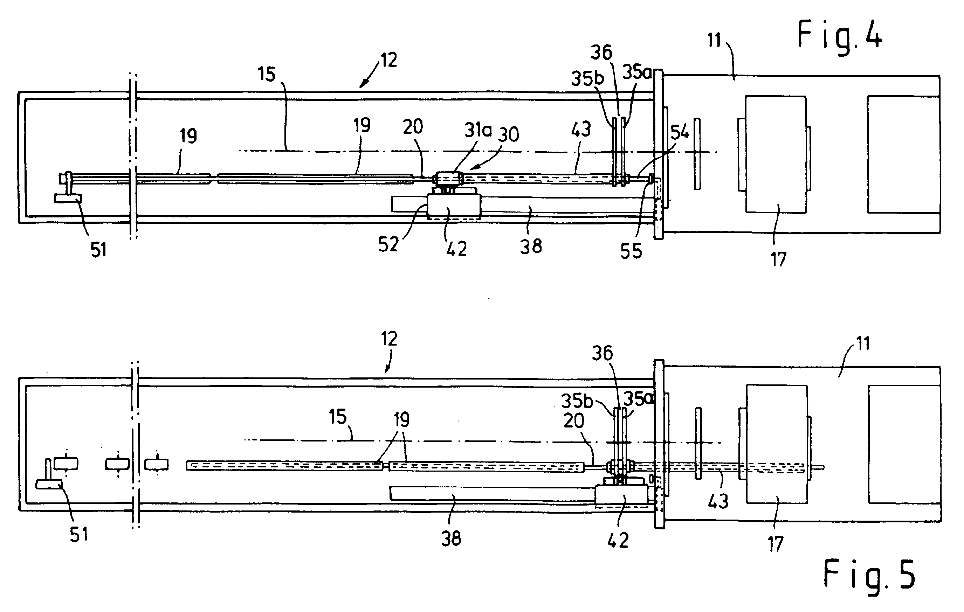

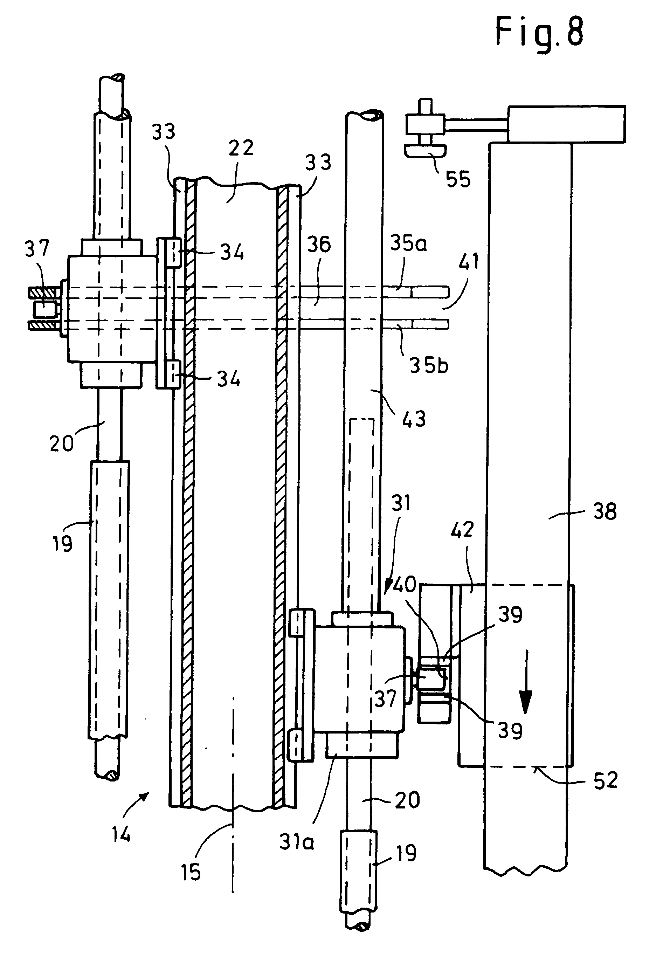

Anschließend wird - bei weiterhin geöffnetem Aufnahmekanal 28 - die Vorschubeinrichtung 30 mit Hilfe der Betätigungseinrichtung 38 zurück-, in den Fig. 2 bis 5 also nach links verfahren, wobei sich das rückwärtige Ende 52 der Vorschubeinrichtung 30 über die in dem offenen Aufnahmekanal liegende, neue Werkstoffstange schiebt (Fig.8), während der vordere Einstoßabschnitt 43 aus der zugehörigen Werkstückspindel der Drehmaschine herausgezogen wird. Dabei wird das im Einstoßabschnitt noch verbliebene Reststück der vorigen Werkstückstange weiterhin vom Spannring 44 fest gehalten, bis die Vorschubeinrichtung ihre Sollposition erreicht hat und sich außerhalb der Mehrspindeldrehmaschine befindet. Das Klemmorgan 31 wird dann geöffnet. Bei dieser Rückzugbewegung nimmt die Vorschubeinrichtung 30 den offenen Aufnahmekasten 19 mit und verschiebt diesen nach hinten, in den Fig.2-5 also nach links (Fig.3,4). Die Widerlagereinrichtung, gegen die sich die neue Materialstange bei der Rückwärtsbewegung von Aufnahmekasten und Vorschubeinrichtung mit ihrer hinteren Stirnseite anlegt, sorgt dafür, daß die Materialstange dabei nicht mit zurückgeschoben wird.

Wenn das vordere Ende des Einstoßabschnitts aus der Werkstückspindel vollständig herausgezogen ist, also die Sollposition erreicht und das Klemmorgan geöffnet hat, schiebt die, über einen Stellantrieb angetriebene Widerlagereinrichtung die neue Materialstange soweit vor, daß das Reststück nach vorne aus dem Einstoßabschnitt herausgeschoben wird und im Zwischenraum 53 zwischen der Rückseite der Drehmaschine und dem Verriegelungselement 35 ungehindert nach unten in einen (nicht dargestellten) Reststückbehälter fällt. Beim weiteren Vorschieben der neuen Stange gelangt das vordere Ende an den eingeschwenkten Anschlag 55. Jetzt wird das Klemmorgan 31 wieder geschlossen, da jetzt - unabhängig von der Gesamtlänge der Stange- ein Teilstück 54 (Fig.3) mit einer definierten Länge aus dem Einstoßabschnitt vorne vorragt.

Nach Anlage der neuen Stange am Anschlag 55 wird über eine Meßeinrichtung an der Widerlagereinrichtung die Stangenlänge erfaßt. Ist dies geschehen und hat das Klemmorgan der Vorschubeinrichtung die Stange gespannt, fährt die Widerlagereinrichtung zurück in ihre Ausgangsstellung, das Anschlagelement wird aus dem Vorschubweg geschwenkt, woraufhin die Vorschubeinrichtung in ihre vordere Betriebsstellung (Fig.5) gebracht wird, in der der Einstoßabschnitt im Inneren der hohlen Werkstückspindel der Drehmaschine aufgenommen ist und das vordere Teilstück 54 in den Arbeitsraum 21 der Maschine zu seiner Bearbeitung hineinragt. Die beiden Teilschalen 23,24 des Aufnahmekastens werden geschlossen, die temporäre Kopplung von Aufnahmekasten und Vorschubeinrichtung wird aufgehoben und die neue Werkstückstange wird in der zuvor bereits beschriebenen Weise abgearbeitet.

Bei dieser Vorwärtsbewegung wird auch der die neue Stange aufnehmende Aufnahmekasten 19 wieder mit nach vorn genommen, wobei diese Mitnahmebewegung durch eine temporäre Koppelung von Vorschubeinrichtung und Aufnahmekasten erfolgen kann.

Das Spannen des Spannrings 44 erfolgt durch Relativverschiebung der Zylinderteile 45,46 zueinander.

Wie sich insbesondere aus Fig.6 ergibt, ist die Erfindung keineswegs auf solche Vorrichtungen beschränkt, bei der lediglich in einer der Spindellagen I bis VI auch ein Vorschub der Werkstoffstange möglich ist. Vielmehr ist es auf einfachste Weise möglich, an mehr als an einer Spindellage einen Vorschub zu realisieren. So ist in Fig.6 ein zusätzlicher Vorschub an der Spindellage III, also um 180° versetzt zur Vorschubstation 26, eine zweite Vorschubstation 57 mit gestrichelten Linien angedeutet. Eine nennenswerte Änderung der Gesamtkonstruktion der erfindungsgemäßen Maschine ist damit nicht verbunden. Es ist lediglich erforderlich, das Verriegelungselement 35 auch in dieser Spindellage zu unterbrechen und in der Unterbrechung eine zweite Schiebeklammer 58 und eine zugeordnete zweite Betätigungseinrichtung 59 für diese vorzusehen, was auch bei vorhandenen Maschinen durch einfachste Nachrüstmaßnahmen geschehen kann. Die zweite Betätigungseinrichtung 59 braucht dabei keinen so großen Verfahrweg wie die erste Betätigungseinrichtung zu haben, der bei dieser zur Realisierung des beschriebenen Ladevorgangs erforderlich ist. Vielmehr reicht bei der zweiten Betätigungseinrichtung ein Verfahrweg, der dem maximalen Vorschub entspricht, den die Materialstangen auszuführen haben.

Um die erfindungsgemäße Vorrichtung in einfacher Weise auch für Mehrkantprofile einsetzen zu können, die schwieriger als rundmaterial in die Spannringe der Klemmorgane bzw. die Spannzangen der Werkstückspindeln der Drehmaschine einzufädeln sind, ist es möglich, an der Beschickungsstation der Vorrichtung ein gegen die Werkstückstange radial anstellbares, angetriebenes Stellorgan (nicht dargestellt) vorzusehen, daß beispielsweise im wesentlichen aus einem von einem Antrieb vorzugsweise langsam angetriebenen Reibrad bestehen kann, mit dem die Werkstückstange während des Einfädelvorgangs langsam gedreht wird, so daß sich die Flanken des Mehrkantprofils auf die Spannflächen der hierauf abgestimmten Spannzangen ausrichten können. Besonders vorteilhaft ist es dabei, das Reibrad von seinem Antrieb entkoppelbar auszugestalten und es während der Werkstückbearbeitung in Anlage an die Werkstückstange gedrückt zu halten, wodurch es in der Lage ist, Schwingungen zu dämpfen, die beim Rotieren der Stange auftreten.

Man erkennt, daß die erfindungsgemäße Vorrichtung höchst flexibel einsetzbar und an die Anforderungen anpaßbar ist. Das beschriebene, bevorzugte Ausführungsbeispiel der Erfindung ist im wesentlichen mit allen weiteren Grundfunktionen marktüblicher Stangenlademagazine wie beispielsweise Zuführung und Vereinzelung der Werkstückstangen aus einem Materialspeicher, Öffnen der Aufnahmekanäle, verschieben der Aufnahmekästen in axialer Richtung, Einschieben der Materialstangen mittels eines Vorschubfingers in die Einstoßabschnitte und auch mit weiteren Zusatzaggregaten und -Funktionen kombinierbar. Dabei muß mit der Erfindung das Reststück einer Materialstange und die Vorschubeinheit regelmäßiger weniger weit zurückgezogen werden als bei bislang bekannten Stangenlademagazinen mit eigenem Materialvorschub, so daß der Beladevorgang in kürzerer Zeit erfolgen kann.

Die erfindungsgemäße Maschine kann sowohl für Drehautomaten mit eigenem Materialvorschub als auch für solche eingesetzt werden bei denen der Materialvorschub vom Magazin vorgenommen wird. Im erstgenannten Fall wird einfach die Vorschubfunktion der Vorschubeinrichtung außer kraft gesetzt, sobald eine neue Materialstange in die Werkstückspindel des Drehautomaten eingeführt und dessen Vorschubeinrichtung übergeben wurde. Der erfindungsgemäße Stangenlader ist somit sowohl in seiner Herstellung als auch seinem Einsatz durch den Benutzer der Maschine sehr einfach und flexibel, erlaubt eine weitgehende Vorfertigung der einzelnen Anlagenbestandteile und kann problemlos auch später noch umgebaut werden.

Die Erfindung ist nicht auf das dargestellte und beschriebene Ausführungsbeispiel und auch nicht auf dessen Wirkungsweise beschränkt. Es sind auch andere Verfahren denkbar, mit denen die neue Werkstückstange an der Beschickungsstation in die Drehmaschine einstoßbar ist. So ist es beispielsweise möglich, am hinteren Ende der neuen Stange einen verschiebliches Widerlager am Maschinengestell vorzusehen, das die neue Stange zunächst durch das geöffnete Klemmorgan der Vorschubeinrichtung bis zu einem Anschlag im Arbeitsraum der Drehmaschine vorschiebt, um die neue Materialstange korrekt zu positionieren. Während die Stange in dieser Lage festgehalten wird, wird das Klemmorgan von der Betätigungseinrichtung so positioniert, daß der vordere Überstand der Stange genau dem Maß entspricht, das erforderlich ist, um die neue Werkstückstange im Arbeitsraum der Drehmaschine in ihre gewünschte Bearbeitungsposition zu bringen. Der bisher zum Einsatz kommende Anschlag im Arbeitsraum wird dann nicht länger benötigt. Es ist auch ohne weiteres möglich, das von einer Materialstange übrig bleibende Reststück beim Ladevorgang nicht mit zurückzuziehen und im Zwischenraum zwischen der Drehmaschine und dem Lademagazin auszuwerfen, sondern das Reststück in den Arbeitsraum der Drehmaschine auszustoßen. Natürlich ist es auch denkbar, bei einem Stangenladevorgang die Vorschubeinrichtung mit ihrem Klemmorgan bzw. dem Einstoßabschnitt gar nicht aus der Werkstückspindel der Drehmaschine heraus zu fahren, sondern in der vorderen Stellung zu belassen und die neue Stange mittels eines verfahrbaren Vorschubfingers in die Vorschubeinrichtung einzustoßen, wobei dann das in dieser noch befindliche Reststück der vorigen Stange in den Arbeitsraum der Drehmaschine ausgestoßen wird.

Wenn ohne Vorpositionierung der Materialstange an einem Anschlag (nach Ausführungsbeispiel Anschlag 55) gearbeitet wird, gilt grundsätzlich, daß im Arbeitsraum der Maschine regelmäßig ein Anschlag zumindest für die Erstpositionierung erforderlich ist. Für die weiteren Vorschubbewegungen bei Abarbeitung der Materialstange ist in keinen Fall ein Anschlag im Arbeitsraum erforderlich, wenn mit aktiven Spannzangen der Vorschub ausgeführt wird.

## Patentansprüche

1. Vorrichtung zum Zuführen von Werkstoffstangen zu einer mehrspindeligen Werkzeugmaschine, insbesondere einem Mehrspindeldrehautomaten, mit mehreren sich in Vorschubrichtung erstreckenden, an einem Maschinengestell (13) um eine zentrale Achse (15) herum angeordneten, den Werkstückspindeln (18) der Werkzeugmaschine zugeordneten und gemeinsam mit diesen weiterschaltbaren Aufnahmekästen (19) mit darin vorgesehenen, wenigstens zur Werkzeugmaschine hin offenen Aufnahmekanälen (28) für Werkstoffstangen (20) und mit einer Vorschubeinrichtung mit einem am werkzeugmaschinenseitigen Ende des in der Schaltposition befindlichen Aufnahmekastens vorgesehenen Klemmorgan (31), das in Vorschubrichtung der Werkstoffstangen hin- und herbewegbar ist, **dadurch gekennzeichnet, daß** jedem Aufnahmekasten (19) eine eigene Vorschubeinrichtung (30) mit einem die im zugehörigen Aufnahmekanal (28) aufgenommene Werkstoffstange (20) fassenden Klemmorgan (31) zugeordnet ist, wobei die Klemmorgane (31) der Vorschubeinrichtungen (30) in einer Vorschubspindellage (VI;26) der Werkzeugmaschine (11) von einer gemeinsamen Betätigungseinrichtung (38) unabhängig vom zugehörigen Aufnahmekasten (19)zwischen der Werkzeugmaschine und dem werkzeugmaschinenseitigen Ende des zugehörigen Aufnahmekastens in Vorschubrichtung (32) hin- und herbewegbar sind.

2. Vorrichtung nach Anspruch 1, **dadurch gekennzeichnet, daß** die Klemmorgane (31) im wesentlichen aus aktiven oder passiven Spannzangen besteht.

3. Vorrichtung nach Anspruch 2, **dadurch gekennzeichnet, daß** die Spannzangen (31) einen vorderen, rohrfömigen Einstoßabschnitt (43) mit an dessen vorderen Ende angeordnetem Spannring (44) aufweisen, dessen Innendurchmesser zur Aufnahme einer Werkstückstange (20) ausgebildet und dessen Außendurchmesser so bemessen ist, daß der rohrförmige Einstoßabschnitt (43) ins Innere einer zugeordneten Hohlspindel (18) der Werkzeugmaschine (11) einschiebbar ist.

4. Vorrichtung nach einem der Ansprüche 1 bis 3, **dadurch gekennzeichnet, daß** die Aufnahmekästen () entlang einer durch ihre Längsachse verlaufenden Teilungsebene geteilt ist und je mindestens zwei Teilschalen (23,24) aufweisen, die mittels einer Öffnungseinrichtung zur Freigabe des Aufnahmekanals (28) relativ zueinander und rechtwinklig zur Längsachse beweglich, vorzugsweise um eine zur Längsachse parallele Schwenkachse (25) verschwenkbar sind.

5. Vorrichtung nach einem der Ansprüche 1 bis 4, **dadurch gekennzeichnet, daß** mindestens einem Aufnahmekasten (19) an seinem rückwärtigen, der Werkzeugmaschine (11) abgewandten Ende eine Widerlagereinrichtung (51) und vorzugsweise auch gefederte Auflagerelemente für eine in den Aufnahmekanal (28) aufgenommene Werkstoffstange (20) zugeordnet ist.

6. Vorrichtung nach einem der Ansprüche 1 bis 5, **gekennzeichnet durch** ein in der Schaltposition (VI;26) zwischen Vorschubeinrichtung (30) und der Werkzeugmaschine (11) vor deren rückwärtiger, mit der im Aufnahmekanal (28) aufgenommenen Werkstoffstange (20) fluchtender Spindelöffnung angeordnete, in den Vorschubweg ein- bzw. aus diesem herausschwenkbares Anschlagelement (55) für die Werkstoffstange (20).

7. Vorrichtung nach einem der Ansprüche 1 bis 6, **dadurch gekennzeichnet, daß** die Aufnahmekästen (19) entgegen der Vorschubrichtung (32) gemeinsam mit den Klemmorganen (31) verschieblich am Maschinengestell und/oder an einem Zentralrohr(13) gelagert sind.

8. Vorrichtung nach einem der Ansprüche 1 bis 7, **dadurch gekennzeichnet, daß** die Aufnahmekästen (19) und die Klemmorgane (31) jeweils eine gemeinsame Länge haben, die der Länge der aufzunehmenden Werkstückstange (20) höchstens entspricht.

9. Vorrichtung nach einem der Ansprüche 1 bis 8, **dadurch gekennzeichnet, daß** die Klemmorgane (31) Betätigungsnocken (37) aufweisen, die in eine umlaufende, im Bereich der gemeinsamen Betätigungseinrichtung (38) eine Unterbrechung (41) aufweisende Verriegelungsnut (36) an der Betätigungseinrichtung (38) einfassen.

10. Vorrichtung nach Anspruch 9, **dadurch gekennzeichnet, daß** ein oder mehrere gemeinsame Betätigungseinrichtungen (38,59) um die zentrale Achse (25) herum angeordnet sind, um gleichzeitig ein oder mehrere Klemmorgane (31) hin- und herzubewegen.

11. Vorrichtung nach einem der Ansprüche 1 bis 10, **dadurch gekennzeichnet, daß** die Vorschubeinrichtung(en) (30) bzw. deren gemeinsame Betätigungseinrichtung (38) einen steuer- bzw. regelbaren Stellantrieb aufweist/aufweisen.

12. Vorrichtung nach Anspruch 11, **dadurch gekennzeichnet, daß** der Stellantrieb ein Linearmotor od.dgl. ist.

13. Vorrichtung nach einem der Ansprüche 1 bis 12, **dadurch gekennzeichnet, daß** mindestens einem Klemmorgan (31) ein an die Umfangsfläche einer Werkstückstange (20) radial anstellbares, angetriebenes Stellorgan zugeordnet ist.

14. Vorrichtung nach Anspruch 13, **dadurch gekennzeichnet, daß** das Stellorgan im wesentlichen aus einem Reibrad o.dgl. besteht.

15. Vorrichtung nach Anspruch 13 oder 14, **dadurch gekennzeichnet, daß** das Stellorgan von seinem Antrieb entkoppelbar ist.

16. Vorrichtung nach einem der Ansprüche 1 bis 15, **dadurch gekennzeichnet, daß** alle in Rotationsrichtung der Spindeltrommel des Mehrspindlers mitschaltenden Teile keine aktiven schaltenden Bauteile beinhalten.

## Claims

1. Device for supplying bars to a multi-spindle machine tool, in particular to a multi-spindle automatic lathe, said device including a plurality of receiving boxes (19), which extend in the feed direction, are located on a machine frame (13) around a central axis (15), are associated with the workpiece spindles (18) of the machine tool and can be advanced together with said workpiece spindles, said receiving boxes including receiving channels (28), which are provided therein for bars (20) and are open at least towards the machine tool, and including a feed device with a clamping member (31), which is provided at the machine tool end of the receiving box located in the switching position and is moveable back and forth in the feed direction of the bars, **characterized in that** each receiving box (19) has associated therewith its own feed device (30) with a clamping member (31) that holds the bar (20) that has been received in the associated receiving channel (28), wherein the clamping members (31) of the feed devices (30), in a feed spindle position (VI; 26) of the machine tool (11), are moveable back and forth in the feed direction (32) by a common actuating device (38), independently of the associated receiving box (19), between the machine tool and the machine tool end of the associated receiving box.

2. Device according to Claim 1, **characterized in that** the clamping members (31) essentially consist of active or passive collet chucks.

3. Device according to Claim 2, **characterized in that** the collet chucks (31) have a front, tubular impact portion (43) with clamping ring (44) located at its front end, its inside diameter being realized for receiving a bar (20) and its outside diameter being dimensioned such that the tubular impact portion (43) can be pushed into the interior of an associated hollow spindle (18) of the machine tool (11).

4. Device according to one of Claims 1 to 3, **characterized in that** the receiving boxes (19) are divided along a joint plane extending through their longitudinal axis and have at least two part shells (23, 24) each, which, for releasing the receiving channel (28), are moveable relative to each other and at right angles to the longitudinal axis by means of an opening device, preferably are pivotable about a pivotal axis (25) parallel to the longitudinal axis.

5. Device according to one of Claims 1 to 4, **characterized in that** at least one receiving box (19), at its rear end remote from the machine tool (11), has associated therewith an abutment device (51) and preferably also resilient support elements for a bar (20) that has been received into the receiving channel (28).

6. Device according to one of Claims 1 to 5, **characterized by** a stop member (55) for the bar (20), said stop member being located in the switching position (VI; 26) between feed device (30) and the machine tool (11) in front of its rear spindle opening that is in alignment with the bar (20) that has been received in the receiving channel (28) and being pivotable into the feed path or pivotable out of said feed path.

7. Device according to one of Claims 1 to 6, **characterized in that** the receiving boxes (19) are mounted on the machine frame and/or on a central tube (13) so as to be displaceable in opposition to the feed direction (32) together with the clamping member (31).

8. Device according to one of Claims 1 to 7, **characterized in that** the receiving boxes (19) and the clamping members (31) each have a common length that corresponds to a maximum of the length of the bar (20) to be received.

9. Device according to one of Claims 1 to 8, **characterized in that** the clamping members (31) have actuating cams (37), which engage in a circumferential locking groove (36) on the actuating device (38), said locking groove having an interruption (41) in the region of the common actuating device (38).

10. Device according to Claim 9, **characterized in that** one or more common actuating devices (38, 59) are located around the central axis (25) in order to move one or more clamping members (31) back and forth at the same time.

11. Device according to one of Claims 1 to 10, **characterized in that** the feed device(s) (30) or their common actuating device (38) has/have a controllable or regulatable setting drive.

12. Device according to Claim 11, **characterized in that** the setting drive is a linear motor or the like.

13. Device according to one of Claims 1 to 12, **characterized in that** at least one clamping member (31) has associated therewith a driven setting member that is adjustable in a radial manner to the circumferential surface of a bar (20).

14. Device according to Claim 13, **characterized in that** the setting member consists substantially of a friction wheel or the like.

15. Device according to Claim 13 or 14, **characterized in that** the setting member can be decoupled from its drive.

16. Device according to one of Claims 1 to 15, **characterized in that** no active switching components are contained in any parts that are activated in the direction of rotation of the spindle drum of the multi-spindle machine.

## Revendications

1. Dispositif pour l'alimentation de barres à une machine-outil multibroches, notamment un tour multibroches automatique, avec plusieurs caisses de réception (19) s'étendant dans la direction d'avance, disposées sur un bâti de la machine (13) autour d'un axe central (15), associées aux broches porte-pièces (18) de la machine-outil et pouvant être commutées conjointement avec celles-ci, avec des canaux de réception (28) prévus dans celles-ci, ouverts au moins vers la machine-outil, pour des barres (20) et avec un dispositif d'avance avec un organe de serrage (31) prévu à l'extrémité, du côté de la machine-outil, de la caisse de réception se trouvant dans la position de commutation, lequel peut être déplacé d'avant en arrière dans la direction d'avance des barres, **caractérisé en ce qu'**un dispositif d'avance propre (30) avec un organe de serrage (31) saisissant la barre (20) reçue dans le canal de réception (28) associé est associé à chaque caisse de réception (19), les organes de serrage (31) des dispositifs d'avance (30) pouvant être déplacés d'avant en arrière dans la direction d'avance (32) dans une position de broche d'avance (VI ; 26) de la machine-outil (11) par un dispositif de commande commun (38) indépendamment de la caisse de réception associée (19) entre la machine-outil et l'extrémité, du côté de la machine-outil, de la caisse de réception associée.

2. Dispositif selon la revendication 1, **caractérisé en ce que** l'organe de serrage (31) se compose essentiellement de pinces de serrage actives ou passives.

3. Dispositif selon la revendication 2, **caractérisé en ce que** les pinces de serrage (31) présentent une portion d'enfoncement avant tubulaire (43) avec une bague de serrage (44) disposée à son extrémité avant, dont le diamètre intérieur est réalisé pour recevoir une barre (20) et dont le diamètre extérieur est dimensionné de telle sorte que la portion d'enfoncement tubulaire (43) puisse être enfoncée à l'intérieur d'une broche creuse associée (18) de la machine-outil (11).

4. Dispositif selon l'une quelconque des revendications 1 à 3, **caractérisé en ce que** les caisses de réception (19) sont divisées le long d'un plan de division s'étendant à travers leur axe longitudinal et présentent chacune au moins deux coques partielles (23, 24), qui peuvent être déplacées l'une par rapport à l'autre et à angle droit par rapport à l'axe longitudinal au moyen d'un dispositif d'ouverture pour libérer le canal de réception (28), de préférence qui peuvent être pivotées autour d'un axe de pivotement (25) parallèle à l'axe longitudinal.

5. Dispositif selon l'une quelconque des revendications 1 à 4, **caractérisé en ce qu'**au moins une caisse de réception (19) est associée à son extrémité arrière opposée à la machine-outil (11) à un dispositif de butée (51) et de préférence aussi à des éléments d'appui à ressort, pour une barre (20) reçue dans le canal de réception (28).

6. Dispositif selon l'une quelconque des revendications 1 à 5, **caractérisé par** un élément de butée (55) pour la barre (20) pouvant pivoter dans et hors de la course d'avance dans la position de commutation (VI ; 26) entre le dispositif d'avance (30) et la machine-outil (11) avant son ouverture de broche arrière, alignée avec la barre (20) reçue dans le canal de réception (28).

7. Dispositif selon l'une quelconque des revendications 1 à 6, **caractérisé en ce que** les caisses de réception (19) sont montées de manière déplaçable à l'encontre de la direction d'avance (32) conjointement avec les organes de serrage (31) sur le bâti de la machine et/ou sur un tube central (13).

8. Dispositif selon l'une quelconque des revendications 1 à 7, **caractérisé en ce que** les caisses de réception (19) et les organes de serrage (31) ont chacun une longueur commune, qui correspond au maximum à la longueur de la barre (20) à recevoir.

9. Dispositif selon l'une quelconque des revendications 1 à 8, **caractérisé en ce que** les organes de serrage (31) présentent des cames d'actionnement (37), qui s'insèrent dans une rainure de verrouillage périphérique (36) sur le dispositif de commande (38), qui présente une interruption (41) dans la région du dispositif de commande commun (38).

10. Dispositif selon la revendication 9, **caractérisé en ce qu'**un ou plusieurs dispositifs d'actionnement communs (38, 59) sont disposés autour de l'axe central (25), afin de déplacer simultanément vers l'avant et vers l'arrière un ou plusieurs organes de serrage (31).

11. Dispositif selon l'une quelconque des revendications 1 à 10, **caractérisé en ce que** le ou les dispositifs d'avance (30) ou leur dispositif de commande commun (38) présentent un entraînement de commande commandable ou réglable.

12. Dispositif selon la revendication 11, **caractérisé en ce que** l'entraînement de commande est un moteur linéaire ou similaire.

13. Dispositif selon l'une quelconque des revendications 1 à 12, **caractérisé en ce qu'**un organe de commande entraîné, pouvant être placé radialement sur la surface périphérique d'une barre (20), est associé à au moins un organe de serrage (31).

14. Dispositif selon la revendication 13, **caractérisé en ce que** l'organe de commande se compose essentiellement d'un roue de friction ou similaire.

15. Dispositif selon la revendication 13 ou 14, **caractérisé en ce que** l'organe de commande peut être désaccouplé de son entraînement.

16. Dispositif selon l'une quelconque des revendications 1 à 15, **caractérisé en ce que** toutes les pièces commutant en même temps dans la direction de rotation du tambour de broche du tour multibroches ne contiennent pas de composant commutant activement.
